## Europäisches Patentamt
## European Patent Office
## Office européen des brevets

(19)

(11) Veröffentlichungsnummer: **0 221 241**
**B1**

(12)

# EUROPÄISCHE PATENTSCHRIFT

(45) Veröffentlichungstag der Patentschrift:
**07.02.90**

(51) Int. Cl.⁴: **B60J 7/04**, B60J 7/043

(21) Anmeldenummer: **86109516.4**

(22) Anmeldetag: **11.07.86**

(54) **Schiebedach für ein Kraftfahrzeug, insbesondere Personenkraftwagen.**

(30) Priorität: **10.10.85  DE 3536184**

(43) Veröffentlichungstag der Anmeldung:
**13.05.87 Patentblatt 87/20**

(45) . Bekanntmachung des Hinweises auf die Patenterteilung:
**07.02.90 Patentblatt 90/6**

(84) Benannte Vertragsstaaten:
**FR GB IT SE**

(56) Entgegenhaltungen:
**EP-A- 0 012 511**
**EP-A- 0 185 993**
**GB-A- 2 078 295**

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Clausen-Schaumann, Andreas, Jägerstrasse 15, D-8139 Bernried(DE)**

(74) Vertreter: **Dexheimer, Rolf, Bayerische Motoren Werke · Aktiengesellschaft Postfach 40 02 40 Petuelring 130 - AJ-21, D-8000 München 40(DE)**

ACTORUM AG

## Beschreibung

Die Erfindung bezieht sich auf ein Schiebedach der im Oberbegriff des Patentanspruchs 1 genannten und aus der DE-A 32 11 519 hervorgehenden Art.

Bei dem bekannten Schiebedach sind an dessen Rahmen zwei seitlich liegende Führungsnuten ausgebildet, in denen jeweils ein am vorderen Deckelrand angelenkter Führungsschlitten über ein Gewindekabel längsverschiebbar geführt ist. Dabei ist an jedem Führungsschlitten eine Schubstange angelenkt, welche an ihrem rückwärtigen Endabschnitt einen Lagerzapfen trägt, der seinerseits in einem Langloch von jeweils einem am Schiebedachrahmen angelenkten Schwenkhebel gleitet. Dieser trägt an seinem deckelseitigen Endabschnitt jeweils einen Führungszapfen, der jeweils in einer Kulisse von zwei an der Deckelunterseite angebrachten Führungsschienen dreh- und längsverschiebbar gelagert ist. Da hierbei in Schließstellung des Deckels die Lagerzapfen der beiden Schubstangen höhenmäßig über den rahmenseitigen Lagerstellen der Schwenkhebel liegen, werden diese und damit der Deckel bei Längsverschiebung der Schubstangen durch deren Lagerzapfen hochgeschwenkt; schließlich ragt der Deckel in seiner extremen Offenstellung - in der er sich über dem hintenliegenden starren Dachbereich befindet - schräg nach hinten und oben. Hierdurch wird insbesondere bei höheren Fahrzeuggeschwindigkeiten der Luftwiderstand des Fahrzeugs erhöht. Ferner entstehen durch den schräg und relativ weit nach hinten ragenden Deckel unangenehme Windgeräusche und dieser kann durch die Luftbeaufschlagung auch leicht vibrieren. Darüber hinaus ist die Schiebedachkonstruktion wegen den zum Verschwenken der Schwenkhebel erforderlichen Schubstangen nicht nur bauaufwendig und damit teuer, sondern durch letztere erhöht sich auch das Gewicht des Schiebedaches.

Ferner ist in der DE-A 32 27 800 ein Schiebedach offenbart, an dessen vorderen, außenliegenden Randbereichen jeweils zwei, sich im Mittelbereich ihrer Längserstreckung kreuzende Hebel angelenkt sind, die jeweils mit ihren unteren Endabschnitten in im Schiebedachrahmen vorgesehenen Führungsnuten längsverschiebbar gleiten. Bei Verschiebung der Hebel längs den Führungsnuten ist der an den oberen Hebelenden angelenkte Deckel längsverschiebbar; dabei befindet sich der Deckel in seiner extremen Offenstellung über dem hintenliegenden, starren Dachbereich und verläuft dabei etwa waagrecht. Da der Deckel hierbei relativ weit über der Dachaußenhaut liegt, verursacht er einen erhöhten Luftwiderstand. Nachdem der Deckel dabei ferner weit frei nach hinten ragt, wird er besonders bei höheren Fahrzeuggeschwindigkeiten zu unangenehm wirkenden Vibrationsschwingungen angeregt. Schließlich sind die zum Verschwenken des Deckels dienenden Hebel verhältnismäßig kompliziert ausgebildet und daher teuer herzustellen.

Aufgabe der Erfindung ist es daher, ein Schiebedach der im Oberbegriff des Patentanspruchs 1 genannten Gattung derart auszubilden, daß der Schwenkhebel beim Verlagern des Deckels in seine Offenstellung durch eine einfach ausgebildete, kostengünstig herstellbare sowie ein geringes Gewicht aufweisende Einrichtung nach rückwärts verschwenkt wird.

Zur Lösung der Aufgabe sind die im kennzeichnenden Teil des Patentanspruchs 1 dargelegten Merkmale vorgesehen.

Da der Führungszapfen in der erfindungsgemäß vorgesehenen kreisförmigen Ausnehmung der Kulisse drehbar gelagert ist und wenigstens eine, mit einer Begrenzung der Kulissenführung fluchtende Abflachung aufweist, wird der Schwenkhebel durch bloßes Verlagern des Deckels hochgeschwenkt und sodann durch den sich in der kreisförmigen Ausnehmung drehenden Führungszapfen soweit rückwärts geschwenkt, bis dessen Abflachung mit den Längsseiten der Kulisse in einer Fluchtebene liegt. In dieser Schwenklage des Schwenkhebels kann der Deckel schließlich weiter rückwärts verlagert werden.

Die in der Kulisse zur Aufnahme des Führungszapfens angeordnete kreisförmige Ausnehmung ist ebenso wie der Führungszapfen und die an diesem angeordnete Abflachung sehr kostengünstig vorzusehen. Dabei hat auch die im wesentlichen aus diesen Merkmalen bestehende Einrichtung zum Verschwenken des Schwenkhebels ein geringes Gewicht und ist sehr robust sowie wenig störanfällig im Betriebseinsatz. Bei Verschleiß kann auch der Führungszapfen sehr leicht ausgetauscht werden.

Bei einem Schwenkhebel, der gemäß den Merkmalen des Patentanspruchs 2 deckelseitig mit einem abgewinkelten Abschnitt versehen ist, befindet sich der Deckel in seiner extremen Offenstellung unmittelbar über dem hintenliegenden, starren Dachbereich und verläuft dabei in aerodynamisch optimaler Weise etwa parallel zu diesem.

Ein Deckel, der gemäß den Merkmalen der Patentansprüche 3 bis 5 an zwei Schwenkhebeln angelenkt ist und wobei darüber hinaus von diesen jeweils ein in die Kulisse der Führungsschienen eingreifender Stützzapfen absteht (Merkmal des Patentanspruchs 5), wird so optimal gehalten, daß er selbst in seiner extremen Offenstellung kaum vibriert. Bei auf den rückwärtigen Bereich einer Wasserfangrinne aufliegenden Schwenkhebeln, die hierfür jeweils eine winkelförmige Ausnehmung haben, wird der Deckel optimal vibrationsfrei gehalten (Merkmal des Patentanspruchs 6).

Weitere Ausgestaltungen der Erfindung sind in anderen Unteransprüchen gekennzeichnet.

Ein Ausführungsbeispiel der Erfindung ist in der Zeichnung dargestellt und wir im folgenden erläutert. Es zeigt:

Fig. 1 eine auseinandergezogene perspektivische Darstellung der wesentlichen Funktionsteile des Schiebedaches,

Fig. 2 eine perspektivische Darstellung eines seitlichen Aufnahemelements mit sich in Schließstellung befindendem Deckel,

Fig. 2a einen Personenkraftwagen mit Schiebedach, dessen Deckel die in Fig. 2 gezeigte Schließstellung aufweist,

Fig. 3 eine Kulisse mit Schwenkhebel in Pfeilrichtung A von Fig. 2, in größerer Darstellung, wobei sich der Führungszapfen in der in dieser dargelegten Drehlage befindet,

Fig. 4 eine perspektivische Darstellung eines seitlichen Aufnahmeelements, wobei der Deckel aus seiner Schließstellung in die Ausstellung verlagert ist,

Fig. 4a einen Personenkraftwagen mit Schiebedach, dessen Deckel die in Fig. 4 dargestellte Ausstellstellung aufweist,

Fig. 5 eine Kulisse mit Schwenkhebel in Pfeilrichtung A von Fig. 4, in größerer Darstellung, wobei der Führungszapfen die in letzterer gezeigte Drehlage einnimmt,

Fig. 6 eine perspektivische Darstellung eines seitlichen Aufnahmeelements mit sich in mitlerer Offenstellung befindendem Deckel,

Fig. 6a einen Personenkraftwagen mit Schiebedach, dessen Deckel sich in der in Fig. 6 gezeigten mittleren Offenstellung befindet,

Fig. 7 eine Kulisse mit Schwenkhebel in Pfeilrichtung A von Fig. 6, in größerer Darstellung, wobei sich der Führungszapfen und der Stützzapfen in der in dieser dargelegten Dreh- bzw. Schwenklage befinden,

Fig. 8 eine Kulisse mit Schwenkhebel in Pfeilrichtung A von Fig. 6, wobei der Stützzapfen in die an der Kulisse vorgesehenen Öffnung eingreift,

Fig. 9 eine perspetivische Darstellung eines seitlichen Aufnahmeelements mit sich in extremer Offenstellung befindendem Deckel, wobei sich ein Schwenkhebel auf einer Wasserfangrinne abstützt,

Fig. 9a einen Personenkraftwagen mit Schiebedach, dessen Deckel in die in Fig. 9 gezeigte extreme Offenstellung verlagert ist,

Fig. 10 eine Kulisse in Pfeilrichtung A von Fig. 9, in größerer Darstellung, wobei sich in der Kulisse sowohl der Führungszapfen als auch der Stützzapfen befinden,

Fig. 11 ein Schiebedach mit einem sich in Schließstellung befindendem Deckel und einem Dachhimmel,

Fig. 11a einen Personenkraftwagen mit Schiebedach, dessen Deckel sich in der in Fig. 11 gezeigten Schließstellung befindet,

Fig. 12 eine Kulisse mit Schwenkhebel in Pfeilrichtung A von Fig. 11, in größerer Darstellung, wobei der Führungszapfen die in dieser dargestellte Drehlage einnimmt,

Fig. 13 eine perspektivische Darstellung eines seitlichen Aufnahmeelements mit einem sich in Schließstellung befindendem sowie ganz oder teilweise aus transparentem Material bestehenden Deckel und einem in mehreren Raststellungen arretierbaren Dachhimmel,

Fig. 13a einem Personenkraftwagen mit Schiebedach, dessen Deckel die in Fig. 13 gezeigte Schließstellung aufweist und wobei auch der Dachhimmel geschlossen ist,

Fig. 13b einen Personenkraftwagen mit teilweise geöffnetem Dachhimmel,

Fig. 14 einen Schwenkhebel mit Kulisse in Pfeilrichtung A von Fig. 13, in größerer Darstellung, wobei der Führungszapfen die in dieser dargelegte Drehlage einnimmt,

Fig. 15 das Schiebedach entsprechend Fig. 13, wobei jedoch der Dachhimmel um einige Raststellungen zurückgeschoben ist.

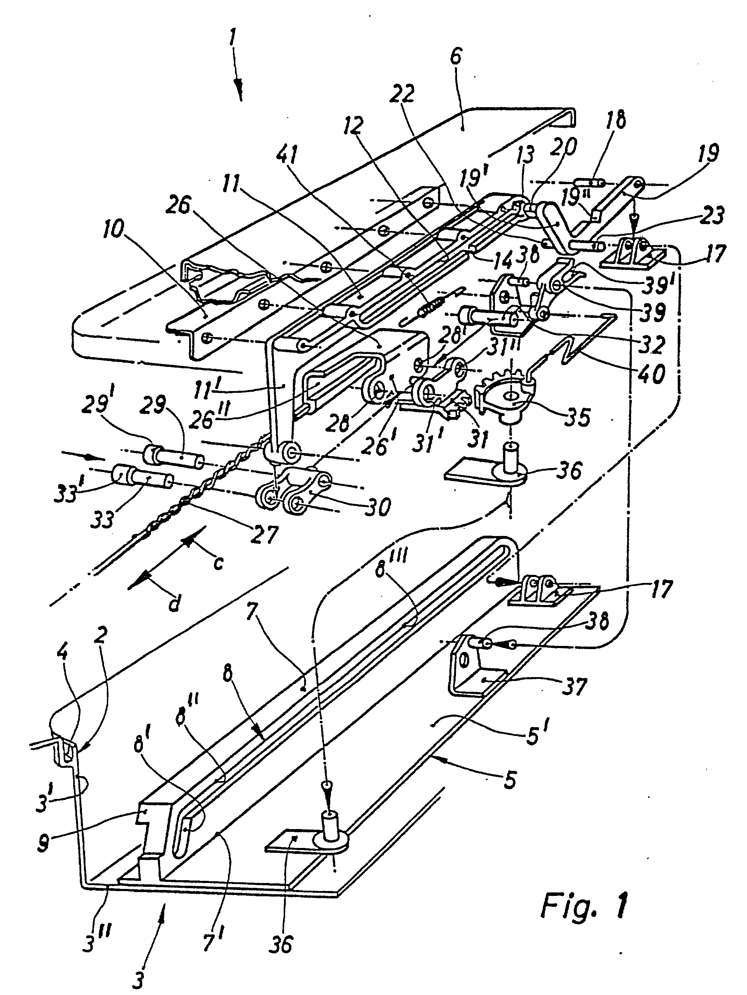

Das in den Figuren 1 bis 15 gezeigte Schiebedach 1 ist in Bezug zu seiner Längsmittelachse symmetrisch aufgebaut, weshalb im folgenden lediglich die in Fahrtrichtung des Personenkraftwagens rechtsliegenden Teile des Schiebedachs 1 erläutert sind; diese sind an diesem jedoch jeweils paarweise vorhanden.

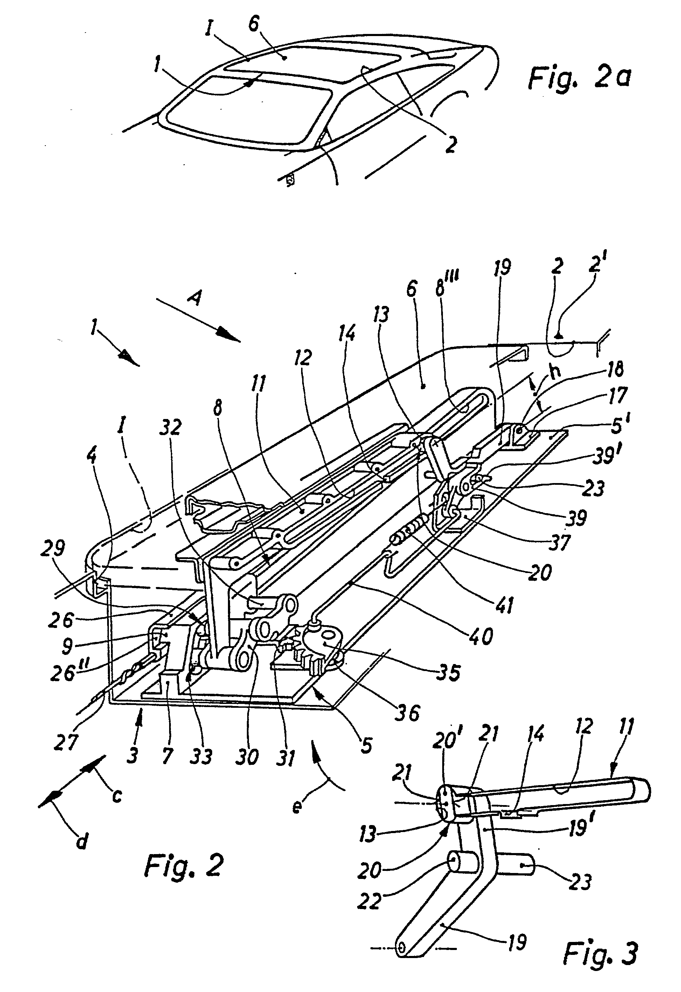

Ein mit dem Schiebedach 1 ausgerüsteter Personenkraftwagen (Figuren 2a, 4a, 6a, 9a, 11a, 13a, 13b) hat zu dessen Aufnahme einen den Dachausschnitt 2 umgebenden Schiebedachrahmen 3, der gemäß den Figuren 1, 2, 4, 6, 9, 11, 13 und 15 aus einem umlaufenden lotrechten Schenkel 3' und einem von diesem etwa waagrecht nach innen ragenden Tragflansch 3" besteht. Dabei ist am obenliegenden Bereich des lotrechten Schenkels 3' des Schiebedachrahmens 3 eine umlaufende Wasserfangrinne 4 ausgebildet, welche ein nach oben offenes, U-förmiges Querschnittsprofil hat. Die beidseits der Längsmittelebene des Personenkraftwagens vorgesehenen seitlichen Tragflansche 3" sind jeweils mit einem langgestreckten Aufnahmeelement 5 versehen. Dieses wird zweckmäßigerweise samt den übrigen, sich an der Unterseite des Deckels 6 des Schiebedachs 1 befindenden Teile - welche im folgenden näher erörtert werden - am Deckel 6 vormontiert und daraufhin (unter dessen Anordnung im Dachausschnitt 2) das Aufnahmeelement 5 am Tragflansch 3" befestigt.

Da die an der Unterseite des Deckels 6 vorgesehenen und zu dessen Verlagern längs des Aufnahmeelements 5 dienenden Teile in allen Figuren im wesentlichen gleichartig sind, werden sie in der auseinandergezogenen perspektivischen Darstellung in Fig. 1 erläutert. Vom Anschraubflansch 5' des Aufnahmeelments 5 steht rechtwinkelig ein sich über dessen ganze Länge erstreckendes Führungsteil 7 ab, das im Bereich des lotrechten Schenkels 3' des Schiebedachrahmens 3 liegt. Das Führungsteil 7 hat auf seiner der Fahrzeuglängsmittelebene zugewandten Innenseite eine nahezu über seine gesamte Länge verlaufende Führungsnut 8. Diese ist rechteckförmig ausgebildet und besteht aus drei stufenlos ineinander übergehenden Längsabschnitten 8', 8", 8"', wobei der vordere, erste Längsabschnitt 8' einen Winkel von etwa 30° und der sich an diesen anschließende, zweite Längsabschnitt 8" einen Winkel von etwa 5° mit der Unterkante 7' des Führungsteils 7 einschließt; der dritte Längsabschnitt 8"' verläuft etwa parallel zur Unterkante 7'. Dabei liegt die Übergangsstelle vom zweiten Längsabschnitt 8" zum dritten Längsabschnitt 8"' etwa im Längsmittelbereich der Führungsnut 8. Bei entsprechend gestalteter Dachform - und damit bei beispielsweise weitgehend ebenflächigem oder stark gekrümmtem Deckel 6 - kann der zweite und dritte Längsabschnitt 8" und 8"' auch geradlinig bzw. stark gekrümmt verlaufen; hierdurch kann der Deckel 6 in optimaler Weise über dem starren hinteren Dachbereich 2' bzw. der Dachhimmel 44, 44' zwischen Dachaußenhaut und Innenverkleidung, angeordnet werden. Am Führungsteil 7 ist ferner eine über sein gesamte Längserstreckung verlaufende Führungsrippe 9 ausgebildet, welche dem lotrechten Schenkel 3' des Schiebedachrahmens 3 zugewandt ist.

Der an dem Schiebedach 1, das in den Figuren 1 bis 10 gezeigt ist, vorgesehene Deckel 6 trägt an seiner Unterseite eine nicht dargestellte Verkleidung, die zweckmäßigerweise durch Kunststoffschaum oder dergleichen gebildet ist. Ferner ist an der Unterseite des Deckels 6 im Bereich seiner gegenüberliegenden, seitlichen Längsrändern jeweils ein Winkelprofil 10 angebracht, an dessen senkrechtem Schenkel jeweils eine parallel zum Führungsteil 7 verlaufende Führungsschiene 11 mit rechteckförmigem Querschnittsprofil durch eine Anzahl von Schrauben befestigt ist. Die Führungsschienen 11 weisen jeweils an ihren einander zugekehrten Breitseiten eine rechteckförmig ausgebildete Kulisse 12 auf. Diese ist zur Fahrzeugmittelebene hin offen und erstreckt sich vom rückwärtigen Ende der Führungsschiene 11 bis in deren vorderem Bereich. Am hinteren Ende der Kulisse 12 der Führungsschiene 11 ist eine kreisförmige Ausnehmung 13 ausgebildet, deren Durchmesser größer ist als die Breite der Kulisse 12. Die kreisförmige Ausnehmung 13 ist in sämtlichen zeichnerischen Darstellungen des Ausführungsbeispiels symmetrisch zur Längserstreckung der Kulisse 12 angeordnet; sie kann jedoch auch asymmetrisch zu dieser, also eine obenliegende oder untenliegende Wand der Kulisse 12 tangierend, vorgesehen sein. An jeder Kulisse 12 der Führungsschienen 11 ist ferner eine rechtwinkelig nach unten verlaufende Öffnung 14 vorgesehen, die gleich tief wie die Kulisse 12 ist.

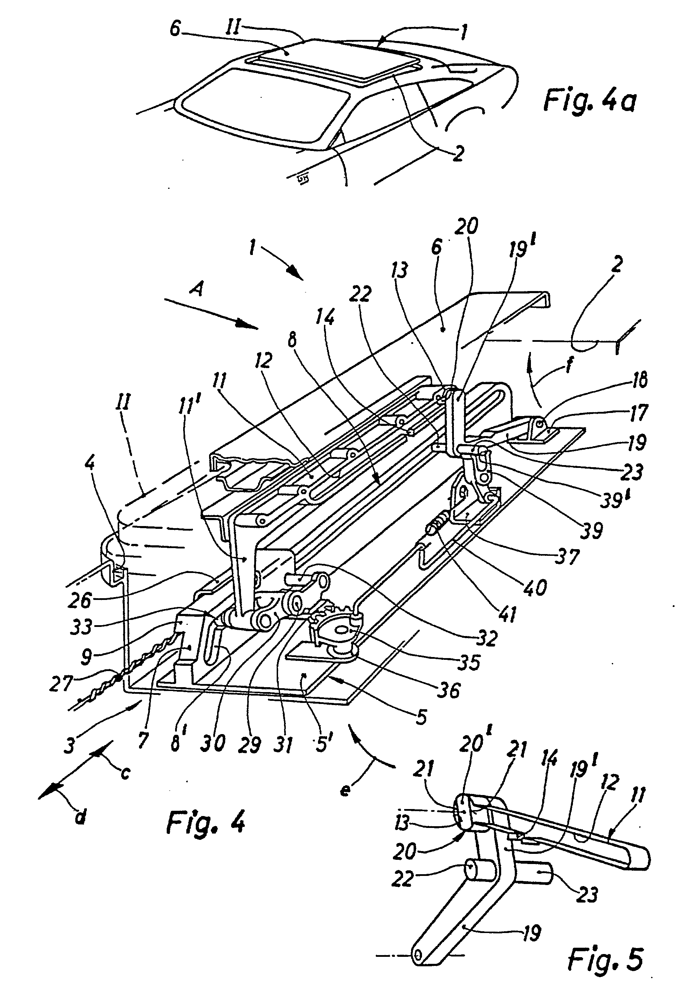

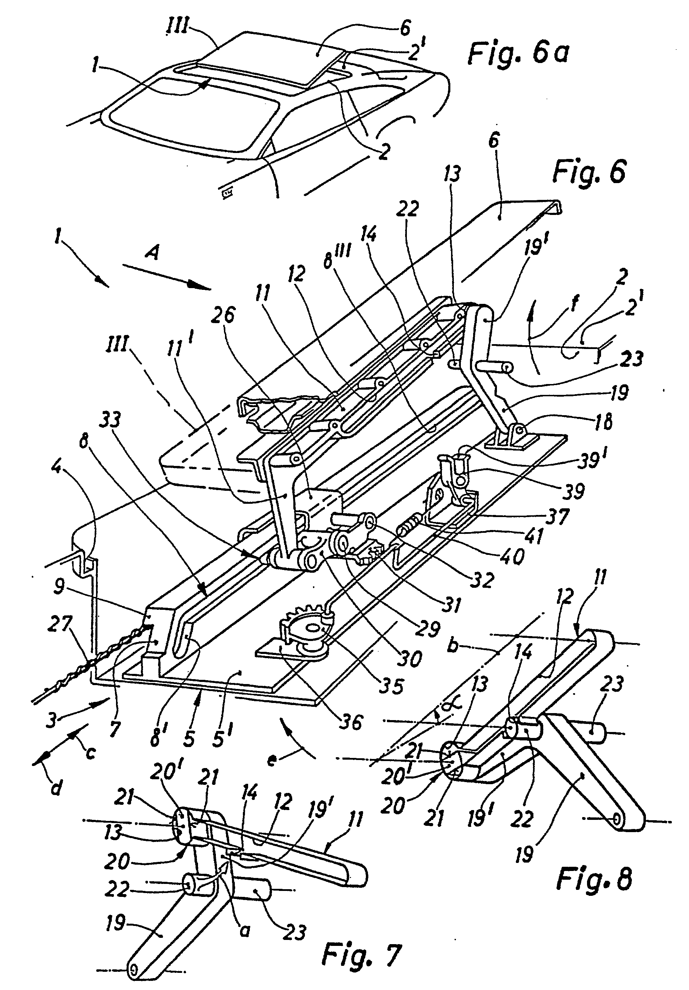

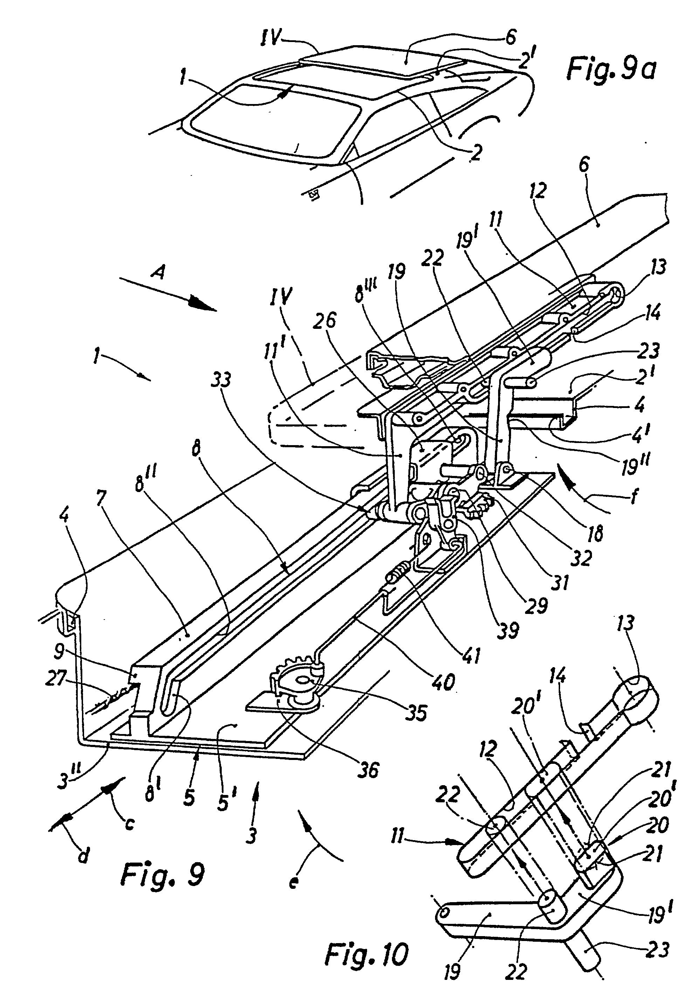

Am rückwärtigen Endbereich eines jeden Aufnahmelements 5 ist auf dessen Anschraubflansch 5' ein Schwenkhebellager 17 befestigt, an dem über einen Lagerbolzen 18 ein Schwenkhebel 19 angelenkt ist. Dieser hat an seinem deckelseitigen Endbereich einen derart abgewinkelten Abschnitt 19', daß bei sich in extremer Offenstellung IV befindendem Deckel 6 (Fig. 9) dieser mit dem darunter liegenden, hinteren Dachbereich 2' in etwa einer Bezugsebene sowie nahe diesem liegt. Dies läßt sich durch eine entsprechende Anordnung der Führungsnuten 8 in den Führungsteilen 7 erreichen. Am freien Endbereich des abgewinkelten Endabschnitts 19' eines jeden Schwenkhebels 19 ist ein Führungszapfen 20 drehfest eingesetzt. Dieser ist in der kreisförmigen Ausnehmung 13 der Kulisse 12 drehbar gelagert; ferner hat der Führungszapfen 20 zwei genenüberliegende, symmetrisch angeordnete Abflachungen 21. Durch diese ist am Führungszapfen 20 ein Gleitstück 20' ausgebildet, das mit Gleitpassung in die Kulisse 12 der Führungsschienen 11 eingreift, so daß diese und damit der Deckel 6 relativ zu den Führungszapfen 20 verschiebbar sind. Wie Fig. 9 und insbesondere Fig. 10 zeigen, sind die Abflachungen 21 jeweils derart an den Führungszapfen 20 angeordnet (bzw. diese in die Schwenkhebel 19 drehfest eingesetzt), daß sie bei in die hintere Endstellung geschwenktem Schwenkhebel 19 - in der er sich über eine winkelförmige Ausnehmung 19" auf dem innenliegenden Schenkel 4' des rückwärtigen Abschnitts der Wasserfangrinne 4 abstützt - in etwa einer Bezugsebene zum darunterliegenden, starren hinteren Dachbereich 2' liegen. In den übrigen Schwenklagen des Schwenkhebels 19 ist dagegen der Führungszapfen 20 mit seinem zylindrischen Außenmantel in der kreisförmigen Ausnehmung 13 drehbar gelagert (Figuren 3, 5, 7, 12, 14). Wie diese Figuren ferner zeigen, steht vom Winkelbereich eines jeden Schwenkhebels 19 ein achsparallel zum Führungszapfen 20 verlaufender und in gleicher Richtung wie dieser weisender Stützzapfen 22 ab. Dabei entspricht dessen Mittenabstand vom Führungszapfen 20 dem Abstand vom Zentrum der kreisförmigen Ausnehmung 13 bis zur Mitte der Breite der Öffnung 14. Ferner ist der Durchmesser des Stützzapfens 22 derart bemessen, daß dieser durch die Öffnung 14 geführt werden kann und daß die Führungsschiene 11 bei sich in deren Kulisse 12 befindenden Stützzapfen 22 relativ zu diesem unter Bildung einer Gleitführung längsverschiebbar ist. In Schließstellung I des Deckels 6 (Fig. 2) liegt die Lagerachse des in der kreisförmigen Ausnehmung 13 drehbar gelagerten Führungszapfens 20 des Schwenkhebels 19 um ein Maß h über der rahmenseitigen Lagerachse, welche sich im Schwenklager 17 befindet. Beim Verschieben des Deckels 6 von seiner Schließstellung I (Fig. 2) über die Ausstellstellung II (Fig. 4) und eine mittlere Offenstellung III (Fig. 6) in seine extreme Offenstellung IV (Fig. 9) werden die Schwenkhebel 19 lediglich durch die konstruktiv vorgesehene, erwähnte Höhendifferenz (Maß h) ihrer rahmenseitiger und deckelseitiger Lagerachsen nach hinten geschwenkt. Dabei drehen sich zunächst die Führungszapfen 20 der Schwenkhebel 19 in der kreisförmigen Ausnehmung 13 der Kulisse 12 (Figuren 3, 5, 7, 12 und 14) bis schließlich der in Pfeilrichtung a in die Öffnung 14 der Kulisse 12 einschwenkende Stützzapfen 22 sich ganz in letzterer befindet. Wie Fig. 8 zeigt, wird dabei auch der Drehwinkel $\alpha$ der Abflachungen 21 am Führungszapfen 20 relativ zur Ebene b der Kulisse 12 stetig kleiner, bis schließlich die Abflachungen 21 und die mit diesen in einer Ebene liegenden Umfangsabschnitte des Stützzapfens 22 mit der oben und unten liegenden Wandung der Kulisse 12 fluchten, also sich letzterer in dieser befindet. In dieser Schwenklage der Schwenkhebel 19 kann - wie die Figuren 9 und 10 zeigen - der Deckel 6 unter Gleiten der Kulisse 12 und damit der Führungsschienen 11 über die Gleitstücke 20' und die Stützzapfen 22 in seine extreme Offenstellung IV längsverschoben werden. Da der Deckel 6 in dieser sowohl auf den Stützzapfen 22 als auch auf den zu diesen im Abstand liegenden Gleitstücken 20' aufliegt, wird er auf breiter Basis und damit weitgehend vibrationsfrei gehalten. Die Schwenkhebel 19 sind jeweils mit einem Aufnahmezapfen 23 versehen, der sich gegenüberliegend des Stützzapfens 22 befindet und koaxial zu diesem verläuft.

Zum Längsverschieben des Deckels 6 ist jeweils ein mit der Führungsschiene 11 in gelenkiger Verbindung stehender Führungsschlitten 26 vorgesehen, der ein U-förmiges Querschnittsprofil mit langem Schenkel 26' und kurzem Schenkel 26" aufweist, wie insbesondere in den Figuren 1 und 2 ersichtlich ist. Dabei ist an der Innenseite des kurzen Schenkels 26" eine längsverlaufende Nut mit U-förmigem Querschnitt ausgebildet, welche der Führungsrippe 9 am Führungsteil 7 zugeordnet ist, wodurch der Führungsschlitten 26 längs diesem zwangsgeführt verschiebbar ist. Am freien Endabschnitt des kurzen Schenkels 26" des Führungsschlittens 26 ist ein zug- und drucksteifes Antriebskabel 27 befestigt, in das in bekannter Weise ein rotierendes, nicht dargestelltes Antriebsritzel eingreift. Dieses wird manuell oder motorisch angetrieben und dadurch je nach seiner Drehrichtung das Antriebskabel 27 und über dieses der Führungsschlitten 26 und letztlich der Deckel 6 in den Pfeilrichtungen c und d längsbewegt. Der lange Schenkel 26' des Führungsschlittens 26 verläuft längs der innenliegenden, lotrechten Wand des Führungsteils 7 und hat an seinem vorderen Endbereich eine Aufnahmebohrung 28, in der ein Gelenkbolzen 29 drehbar gelagert ist. Dieser hat einen zum kurzen Schenkel 26" hin verlaufenden Endabschnitt, der zweckmäßigerweise über eine Kunststoffrolle 29' in die Führungsnut 8 des Führungsteils 7 eingreift, während der gegenüberliegende Endabschnitt des Gelenkbolzens 29 von einer Bohrung in einer Gelenklasche 30 drehbar oder drehfest aufgenommen ist. Der Gelenkbolzen 29 ragt dabei so weit über die Gelenklasche 30 hinaus, daß auf seinen freien Endabschnitt eine Zahnstange 31 über eine obenliegende Aufnahmebohrung 31' aufgepreßt werden kann. Benachbart dieser befindet sich eine weitere Aufnahmebohrung 31", in die ein Kulissenbolzen 32 drehfest eingesetzt ist, der mit seinem gegenüberliegenden Endabschnitt in eine Aufnahmebohrung 28' des langen Schenkels 26' drehfest eingesetzt ist und so weit über diesen hinausragt, daß sein freier Endabschnitt zweckmäßigerweise über eine Kunststoffrolle in die Führungsnut 8 eingreift. Vom vorderen Ende der Führungsschienen 11 steht jeweils ein nach unten verlaufender Schubarm 11' ab, an dessen freiem Endabschnitt in eine Bohrung ein Gleitzapfen 33 drehfest eingesetzt ist; dieser ragt mit seinen beiden Endabschnitten über den Schubarm 11' hinaus. Dabei greift der dem Führungsteil 7 zugewandte Endabschnitt des Gleitzapfens 33 zweckmäßigerweise über eine Kunststoffrolle 33' in die Führungsnut 8 ein, während auf den beidseits des Schubarms 11' liegenden Längsabschnitten des Gleitzapfens 33 jeweils ein Längsteil der Gelenklasche 30 über eine Lagerbohrung drehbar gelagert ist. Der Gleitzapfen 33 verläuft dabei achsparallel zum Gelenkbolzen 29. Wie Fig. 2 zeigt, befindet sich in Schießstellung I des Deckels 6 der Gleitzapfen 33 nahe der tiefsten Stelle des ersten Längsabschnitts 8' der Führungsnut 8, während dabei der Gelenkbolzen 29 unmittelbar am vorderen Endbereich des zweiten Längsabschnittes 8" liegt; ebenfalls in diesem, benachbart des Gelenkbolzens 29, befindet sich auch der Kulissenbolzen 32.

Die von jedem Führungsschlitten 26 abstehende Zahnstange 31 kämmt mit einem Zahnsegment 35, das mit seiner Lagerbohrung auf einem an Anschraubflansch 5' des Aufnahmeelments 5 befestigten Lagerteil 36 drehbar gelagert ist. Im Abstand von diesem ist auf dem Anschraubflansch 5' ferner ein Anschraubwinkel 37 befestigt, von dem ein achsparallel zum Aufnahmezapfen 23 des Schwenkhebels 19 verlaufender Lagerzapfen 38 absteht. An diesem ist eine Sicherungsgabel 39 mit einer nach außen offenen Maulöffnung 39' und einem dieser etwa gegenüberliegenden Anlenkfortsatz schwenkbar gelagert. Eine an diesem schwenkbar gelagerte Schubstange 40 ist mit ihrem gegenüberliegenden Endabschnitt am Zahnsegment 35 angelenkt. Schließlich ist am Anschraubwinkel 37 eine Zugfeder 41 eingehängt, die mit ihrem gegenüberliegenden Ende an einer Abwinkelung der Schubstange 40 angreift. In Schließstellung I des Deckels 6 (Fig. 2) greift die Zugfeder 41 an der Schubstange 40 mit Vorspannung an und entspannt sich stetig während den Öffnungsbewegungen des Deckels 6; somit wirkt die Zugfeder 41 unterstützend bei Verschwenkung des Zahnsegments 35 in Pfeilrichtung e. Wie Fig. 2 zeigt, übergreift bei sich in Schließstellung I befindendem Deckel 6 die Sicherungsgabel 39 den vom Schwenkhebel 19 abstehenden Aufnahmezapfen 23 derart, daß ihre Maulöffnung 39' nach hinten weist. Durch das Zusammenwirken von Aufnahmezapfen 23 und Sicherungsgabel 39 wird somit in Schließstellung I des Deckels 6 dessen rückwärtiger Bereich gegen gewaltsames, nach oben gerichtetes Öffnen gesichert. Die am Aufnahmezapfen 23 angreifende Sicherungsgabel 39 wirkt jedoch auch unterstützend beim Verlagern des Deckels 6 von seiner Schließstellung I (Fig. 2) in seine Ausstellstellung II (Fig. 4). Da hierbei die am Führungsschlitten 26 befestigte Zahnstange 31 mit dem Zahnsegment 35 kämmt, wird dieses in Pfeilrichtung e verschwenkt und schwenkt dadurch seinerseits über die Schubstange 40 die Sicherungsgabel 39 nach oben (Fig. 4). Diese greift dabei mit ihrem untenliegenden Schenkel an dem vom Schwenkhebel 19 abstehenden Aufnahmezapfen 23 an und unterstützt damit das Hochschwenken des Schwenkhebels 19 (Pfeilrichtung f) und letztlich das Verlagern des Deckels 6 von seiner Schließstellung I in seine Ausstellstellung II (Fig. 4). In dieser ragt die Maulöffnung 39' der Sicherungsgabel 39 nach oben und gibt damit den Aufnahmezapfen 23 am Schwenkhebel 19 zu dessen weiterer Verschwenkung in Pfeilrichtung f frei. Die Verlagerung des Deckels 6 von seiner Schließstellung I in seine Ausstellstellung II kann jedoch auch ohne die Unterstützung der Sicherungsgabel 39 erfolgen. Ferner kann anstelle von der erwähnten Ausschäumung der Unterseite des Deckels 6 mit Kunststoff oder auch zusätzlich zu dieser ein aus flexiblem Material bestehender, nicht dargestellter Dachhimmel vorgesehen werden, der üblicherweise im Bereich des rückwärtigen Endes des Deckels 6 und unterhalb des Fahrzeugdaches auf eine durch Federkraft vorgespannte Rolle aufwickelbar ist.

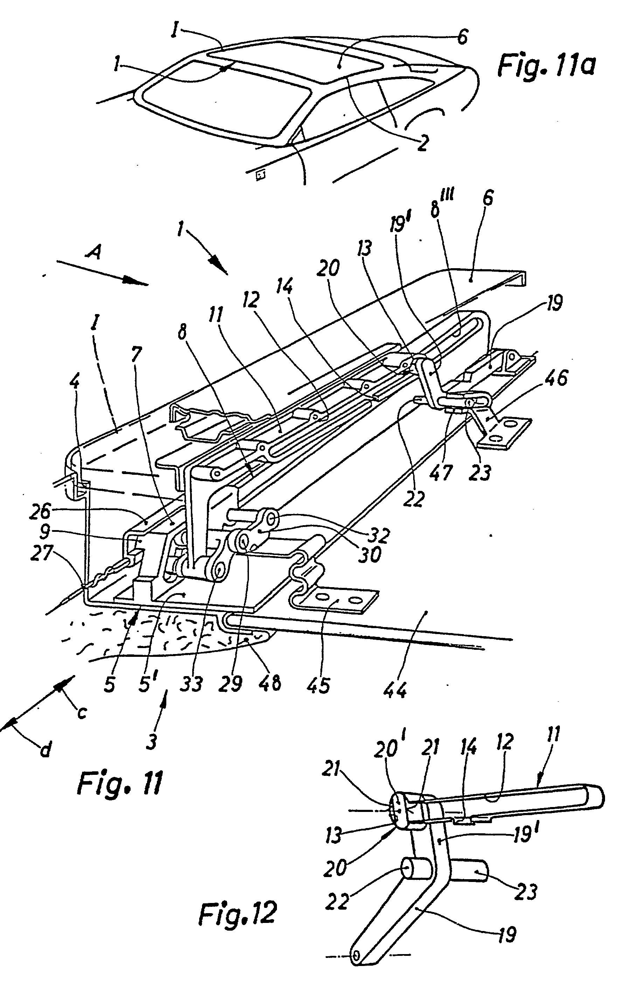

Das in den Figuren 11 bis 15 dargestellte Schiebedach 1 weist außer den Teilen 31 und 35 bis 41 sämtliche Teile auf, welche auch das in den Figuren 1 bis 10 gezeigte Schiebedach 1 hat. Daher werden im folgenden bei der Schilderung der Figuren 11 bis 15 lediglich die bei diesen hinzukommenden Teile erwähnt.

Bei dem in Fig. 11 gezeigten Schiebedach 1 ist der Deckel 6 an seiner Unterseite nicht mit Kunststoff ausgeschäumt. Der bei diesem Schiebedach 1 aus biegesteifem Material bestehende Dachhimmel 44 verläuft mit seinen Seitenrändern längs dem innenliegenden Rand des Anschraubflansches 5' des Aufnahmeelements 5 und im Bereich einer Innenverkleidung 48. An den vorderen Seitenbereichen des Dachhimmels 44 ist jeweils eine gelenkartig wirkende Verbindungslasche 45 angebracht, die mit ihrem gegenüberliegenden Ende an der Gelenklasche 30 befestigt ist. Ferner ist an den hinten liegenden Seitenbereichen des Dachhimmels 44 jeweils ein nach oben abstehender Haltewinkel 46 angebracht, der einen schräg nach oben und vorne verlaufenden Aufnahmeschlitz 47 aufweist; dieser ist nach vorne offen und kann bedarfsweise auch gekrümmt ausgebildet sein. Der Dachhimmel 44 liegt in seiner in Fig. 11 gezeigten Schließstellung über den Haltewinkel 46 am Aufnahmezapfen 23 des Schwenkhebels 19 an. Da der Dachhimmel 44 über die gelenkig wirkenden Verbindungslaschen 45 mit den Führungsschlitten 26 in Verbindung steht, wird er beim Verlagern des Deckels 6 von der Schließstellung I in die extreme Offenstellung IV mit längsbewegt und dabei in den Bereich zwischen Dachaußenhaut und Innenverkleidung verlagert. Dabei wirkt der Aufnahmeschlitz 47 des Haltewinkels 46 derart mit dem Aufnahmezapfen 23 des Schwenkhebels 19 zusammen, daß er beim Hochschwenken des letzteren (Pfeilrichtung f) freigegeben wird.

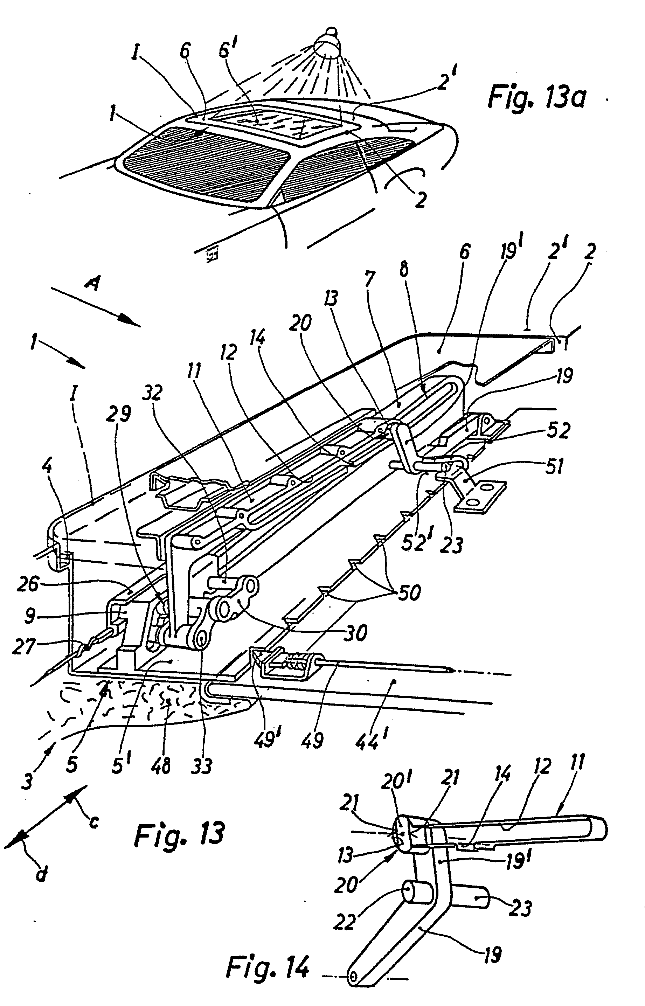

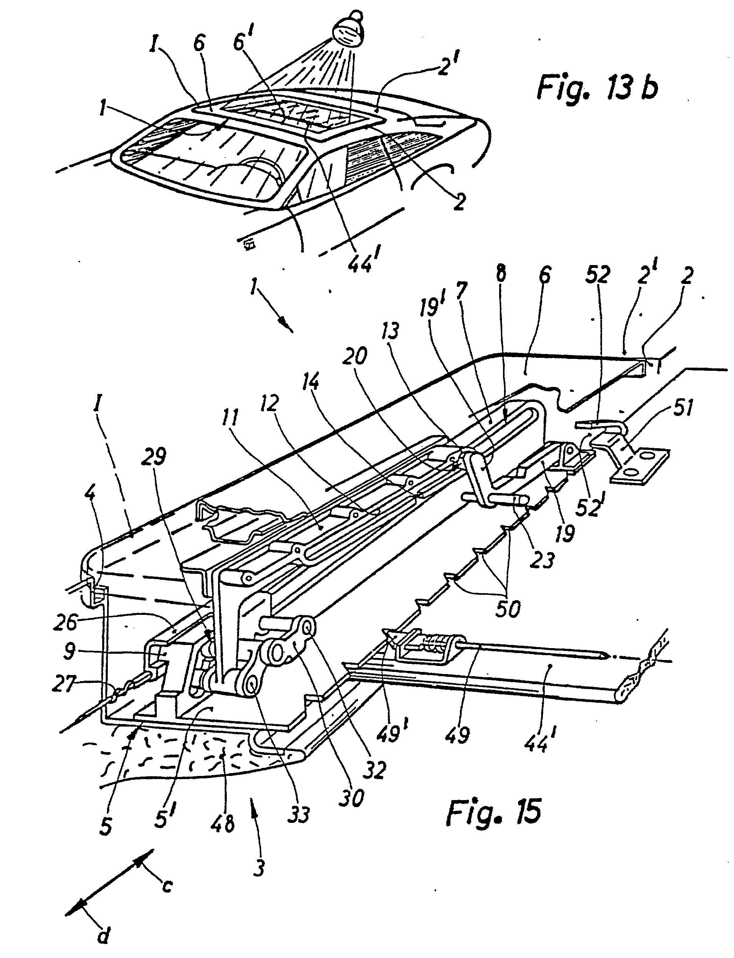

In Fig. 13 ist der aus biegesteifem, undurchsichtigem Material bestehende Dachhimmel 44' an seinen beiden seitlichen Randbereichen durch eine an der Unterseite des Tragflansches 3" des Schiebedachrahmens 3 angebrachte Innenverkleidung 48 längsverschiebbar geführt. Auf seiner Oberseite trägt der Dachhimmel 44' eine manuell betätigbare Arretiereinrichtung 49, deren Riegel 49' in eine Anzahl von im Anschraubflansch 5' ausgebildeten Ausnehmungen 50 federbelastet eingreift. Ferner ist am Dachhimmel 44' an seinen beiden hintenliegenden Seitenbereichen jeweils ein nach oben abstehender Haltewinkel 51 angebracht, an dem ein schräg nach vorne und oben verlaufender Tragarm 52 vorgesehen ist; durch diesen ist eine nach vorne offene Aufnahmeöffnung 52' gebildet. Die Innenseite des Tragarms 52 kann auch etwa entsprechend der Kreisbogenbewegung des Aufnahmezapfens 23 gekrümmt ausbildet sein. In Schließstellung I des Deckels 6 überdeckt der Tragarm 52 den vom Schwenkhebel 19 abstehenden Aufnahmezapfen 23, so daß dadurch der Deckel 6 mit gegen unbefugtes, nach oben gerichtetes Öffnen gesichert ist. Wird der Dachhimmel 44' jedoch um wenigstens eine Raststellung nach hinten geschoben (Fig. 15), so ist beim Ausführungsbeispiel der Aufnahmezapfen 23 freigegeben und der Deckel 6 kann dadurch in üblicher Weise bis in seine extreme Offenstellung IV verlagert werden.

Bei dem in den Figuren 13 bis 15 veranschaulichten Ausführungsbeispielen des Schiebedachs 1 besteht der Deckel 6 mindestens in seinem Mittelbereich, bedarfsweise auch vollständig aus transparentem Material 6'. Befindet sich dabei der Dachhimmel 44' in seiner vordersten Raststellung (Fig. 13), so kann über den Deckel 6 in das Fahrzeuginnere kein Licht eindringen (Fig. 13a). Wird jedoch der Dachhimmel 44' um wenigstens einige Raststellungen nach hinten verlagert (Fig. 15), so kann über das transparente Material 6' des Deckels 6 Licht in das Fahrzeuginnere gelangen (Fig. 13b).

Der Deckel 6 kann mit einer nicht dargestellten, umlaufenden Dichtung versehen sein, die zweckmäßigerweise auf den nach unten ragenden Flansch aufgesteckt wird und eine seitlich abstehende Dichtlippe aufweist. Diese kann in Schließstellung I des Deckels 6 mit Vorspannung auf Dachaußenhaut aufliegen. Eine derartige Dichtlippe hat vorteilhafterweise eine hohe Dichtwirkung gegen Wassereintritt Geräuscheinwirkungen. Eine zweite Schlauchdichtung kann auf den innenliegenden Schenkel 4' der Wasserfangrinne 4 aufgesteckt werden.

Die Wirkungsweise des erfindungsgemäßen Schiebedachs 1, wobei zunächst die Figuren 1 bis 10 erläutert werden, ist folgende (Beschreibung erfolgt in Bezug auf die sich an einem Aufnahmeelement 5 befindenden Teile):

Der sich gemäß Fig. 2 und 2a in Schließstellung I befindende Deckel 6 des Schiebedachs 1 wird durch Längsverlagern des Antriebkabels 27 in Pfeilrichtung c über den Führungsschlitten 26 in seine Ausstellstellung II verlagert, welche in Fig. 4 und 4a dargestellt ist. Hierbei gleitet der Gleitzapfen 33 über den schräg nach oben verlaufenden Längsabschnitt 8' der Führungsnut 8 und hebt dadurch über den Schubarm 11' den vorderen Rand des Deckels 6 nach oben an. Nachdem gleichzeitig die Zahnstange 31 mit dem Zahnsegment 35 kämmt, wird dieses in Pfeilrichtung e verschwenkt und dadurch die in Schließstellung I des Deckels 6 den Aufnahmezapfen 23 übergreifende Sicherungsgabel 39 nach oben, zur dessen Freigabe, geschwenkt. Da ferner in Schließstellung I des Deckels 6 der Führungszapfen 20 des Schwenkhebels 19 oberhalb dessen schiebedachrahmenseitiger Lagerstelle liegt (Maß h), wird der Schwenkhebel 19 durch das bloße Rückwärtsverlagern des Deckels 6 unter Bildung eines Kreisbogens um den Lagerbolzen 18 in Pfeilrichtung f nach oben geschwenkt; dabei dreht sich der Führungszapfel 20 in der kreisförmigen Ausnehmung 13 der Kulisse 12 (Fig. 5). Bei weiterem Längsverlagern des Führungsschlittens 26 in Pfeilrichtung c - wobei stets der Gleitzapfen 33, der Gelenkbolzen 29 und der Kulissenbolzen 32 in der Führungsnut 8 kulissenartig gleitet - wird der Deckel 6 von seiner Ausstellstellung II nach hinten, beispielsweise in die in Fig. 6 und 6a dargestellte mittlere Offenstellung III verlagert. Wie aus den Figuren 6 und 7 hervorgeht, wird dabei die Führungsschiene 11 über die am rückwärtigen Ende ihrer Kulisse 12 vorgesehene kreisförmige Ausnehmung 13 um den Führungszapfen 20 des Schwenkhebels 19 geschwenkt, wodurch dieser in Pfeilrichtung f (durch weiteres Längsverlagern des Führungsschlittens 26 in Pfeilrichtung c) bis zu seinem Kulminationspunkt hochgeschwenkt wird; dabei wird auch gleichzeitig der Deckel 6 nach oben verlagert. Wird der Schwenkhebel 19 über seinen Kulminationspunkt hinaus in Pfeilrichtung f geschwenkt (durch weiteres Längsverlagern des Führungsschlittens 26 in Pfeilrichtung c), so nähert sich der vom Schwenkhebels 19 abstehende Stützzapfen 22 der an der Kulisse 12 vorgesehenen Öffnung 14 (in Fig. 7 mit Pfeilrichtung a veranschaulicht) und greift schließlich .in diese (Fg. 8) und sodann in die Kulisse 12 ein. Gleichzeitig .verlaufen auch die am Führungszapfen 20 vorgesehenen Abflachungen 21 fluchtend zu den angrenzenden, gegenüberliegenden Wandungen der Kulisse 12, so daß sich nun mehr sowohl der Stützzapfen 22 als auch das Gleitstück 20' des Führungszapfens 20 in der Kulisse 12 befinden, wie Fig. 10 zeigt. In dieser Schwenklage des Schwenkhebels 19 - in der er sich seinerseits über die winkelförmige Ausnehmung 19" auf dem innenliegenden Schenkel 4' der Wasserfangrinne 4 abstützt - kann der Deckel 6 von der mittleren Offenstellung III in den Bereich der extremen Offenstellung IV durch weiteres Längsbewegen des Führungsschlittens 26 in Pfeilrichtung c verlagert werden (Fig. 9 und Fig. 9a). Dabei gleitet die Kulisse 12 der Führungsschiene 11 über das Gleitstück 20' des Führungszapfens 20 und den Stützzapfen 22, bis sie schließlich mit ihrer vorderen Stirnseite an diesem anliegt. In dieser Schiebestellung wird der Deckel 6 durch die beiden Schwenkhebel 19 oberhalb des hinteren, starren Dachbereichs 2' auf breiter Basis und damit optimal vibrationsfrei gehalten.

Zum Verlagern des Deckels 6 von seiner extremen Offenstellung IV in seine Schließstellung I wird das Antriebskabel 27 durch entsprechende Drehrichtung des Antriebritzels in Pfeilrichtung d längsbewegt, wodurch natürlich auch der Führungsschlitten 26 in diese Richtung verlagert wird. Dabei gleitet zunächst der Deckel 6 längs der Kulisse 12 über Gleitstück 20' und Stützzapfen 22 soweit in Pfeilrichtung d nach vorne, bis sich der Führungszapfen 20 in der kreisförmigen Ausnehmung 13 befindet. Bei weiterem Längsverlagern des Führungsschlittens 26 in Pfeilrichtung d wird die Führungsschiene 11 über die kreisförmige Ausnehmung 13 um den Führungszapfen 20 des Schwenkhebels 19 geschwenkt und zieht diesen dadurch von seiner rückwärtigen Ruhelage entgegen der Pfeilrichtung f nach oben, wobei gleichzeitig auch der Stützzapfen 22 entgegen der Pfeilrichtung f aus der Öffnung 14 der Kulisse 12 ausgeschwenkt wird. Durch weiteres Verlagern des Führungsschlittens 26 in Pfeilrichtung d wird der Deckel 6 über seine mittlere Offenstellung III - wobei der Schwenkhebel 19 entgegen der Pfeilrichtung f abwärts gesenkt wird - in seine Ausstellstellung II verlagert. Da die Maulöffnung 39' der Sicherungsgabel 39 in deren Ruhelage durch die Wirkung der Zugfeder 41 nach oben weist, kann in dieser Schiebestellung des Deckels 6 und Schwenklage des Schwenkhebels 19 dessen Aufnahmezapfen 23 in die Sicherungsgabel 39 einschwenken. In der Ausstellstellung II des Deckels 6 steht die Zahnstange 31 mit dem Zahnsegment 35 bereits in verzahnungsartigem Eingriff (Fig. 4), wodurch beim nun erfolgenden Verlagern des Deckels 6 in seine Schließstellung I das Zahnsegment 35 entgegen der Pfeilrichtung e geschwenkt und dadurch die Sicherungsgabel 39 unter Überdeckung des Aufnahmezapfens 23 nach rückwärts verlagert wird (Fig. 2). Beim Verschieben des Deckels 6 von der Ausstellstellung II in die Schließstellung I gleitet der Gleitzapfen 33 über den ersten Längsabschnitt 8' der Führungsnut 8 nach unten (während sich der Gelenkbolzen 29 und Kulissenbolzen 32 im zweiten Längsabschnitt 8" befinden), wodurch der Deckel 6 im Dachausschnitt 2 bündig zur angrenzenden Dachaußenhaut verläuft.

Der Deckel 6 des in den Figuren 11 bis 15 dargestellten Schiebedachs 1 wird vollkommen analog wie vorstehend dargelegt von seiner Schließstellung I in seine extreme Offenstellung IV verlagert. Daher wird im folgenden beim Verlagern des Deckels 6 lediglich auf den Dachhimmel 44 bzw. 44' bezug genommen. Wird das in Fig. 11 und 11a dargestellte Schiebedach 1 von seiner Schließstellung I wie erläutert in seine extreme Offenstellung IV verlagert, so wird der Dachhimmel 44 über die gelenkartige Verbindungslasche 45 in einen zwischen der Dachaußenhaut und der Innenverkleidung liegenden Zwischenraum verlagert. Da dabei auch der Haltewinkel 46 rückwärts verschoben wird, wird der Aufnahmezapfen 23 am Schwenkhebel 19 für dessen Hochschwenken (Pfeilrichtung f) freigegeben. Bei dem erwähnten Verlagern des Deckels 6 von seiner Schließstellung I in die Ausstellstellung II entsteht durch das gleichzeitige Rückverlagern des Dachhimmels 44 sowohl am vorderen als auch am rückwärtigen Deckelbereich ein Lüftungsspalt und damit ein Lüftungslabyrinth das vorteilhafterweise geräuschdämpfend wirkt.

Dieser Vorteil besteht natürlich auch bei dem in den Figuren 13 bis 15 gezeigten Schiebedach 1. Lediglich läßt sich dessen Dachhimmel 44' über die Arretiereinrichtung 49 manuell längsbewegen, wobei letztere in die jeweils gewünschte Ausnehmung 50 einrasten kann. Da der in diesen Figuren gezeigte ·Deckel 6 ganz oder teilweise aus transparentem Material 6' besteht, kann bei ganz oder teilweise geöffnetem Dachhimmel 44' über den Deckel 6 Licht in den Fahrzeuginnenraum eindringen (Fig. 13b und 15), während bei geschlossenem Dachhimmel 44' (Fig. 13) in den Fahrzeuginnenraum über den Deckel 6 kein Licht eindringt, wie Fig. 13a zeigt.

**Patentansprüche**

1. Schiebedach (1) für ein Kraftfahrzeug, insbesondere Personenkraftwagen, mit folgenden Merkmalen:
- ein den Dachausschnitt (2) umgebender Rahmen (3) mit zwei gegenüberliegenden, längsverlaufenden Führungen (7),
- einem Deckel (6), der mit seinen vorderen Seitenbereichen mit den Führungen (7) in Verbindung steht,
- wenigstens ein, sich am rückwärtigen Bereich des Schiebedachrahmens (3) befindender Schwenkhebel (19), der einerseits an letzterem (3) und andererseits über einen Führungszapfen (20) am Deckel (6) angelenkt ist, wobei in dessen Schließstellung (I) die deckelseitige Lagerachse (20) des Schwenkhebels (19) über dessen rahmenseitiger Lagerachse (18) liegt (Maß h),

- an der Deckelunterseite befindet sich wenigstens eine, parallel zu den Führungen (7) verlaufende Führungsschiene (11) mit einer längsverlaufenden Kulisse (12), in welcher der Führungszapfen (20) des Schwenkhebels (19) dreh- und längsverschiebbar gelagert ist,
- der Deckel (6) wird bei Betätigung eines an einem längsverschiebbaren Teil (26) angreifenden Antriebsmittels (27) aus seiner Schließstellung (I) über eine Ausstellstellung (II) in eine extreme Offenstellung (IV) verlagert, in der sich der Deckel mit seinem rückwärtigen Endbereich über dem hintenliegenden, starren Dachbereich (2') befindet, gekennzeichnet durch die folgenden Merkmale:
- die in der Führungsschiene (11) vorgesehene Kulisse (12) hat an ihrem hinteren Ende eine kreisförmige Ausnehmung (13), in welcher der Führungszapfen (20) des Schwenkhebels (19) drehbar gelagert ist,
- der drehfest in den Schwenkhebel (19) eingesetzte Führungszapfen (20) weist wenigstens eine Abflachung (21) auf, welche in der hinteren Endstellung des Schwenkhebels mit einer Begrenzung der Kulissenführung fluchtet, so daß die Kulisse (12) relativ zum Führungszapfen (20) verschiebbar ist.

2. Schiebedach nach Anspruch 1, dadurch gekennzeichnet, daß der Schwenkhebel (19) deckelseitig einen derart abgewinkelten Abschnitt (19') aufweist, daß bei sich in extremer Offenstellung (IV) befindendem Deckel (6) dieser mit dem darunterliegenden, hinteren Dachbereich (2') in etwa einer Bezugsebene sowie nahe diesem liegt, wobei die Führungen (Führungsnuten 8) entsprechend verlaufen.

3. Schiebedach nach Anspruch 1, wobei der Deckel (6) zwei, sich an seinen Längsrändern befindende Führungsschienen (11) mit rechteckförmigem Querschnitt aufweist, dadurch gekennzeichnet, daß die Führungsschienen (11) jeweils an ihren einander zugekehrten Breitseiten mit der rechteckförmigen, seitlich offenen Kulisse (12) versehen sind, an deren Ende sich die kreisförmige Ausnehmung (13) befindet.

4. Schiebedach nach Anspruch 3, dadurch gekennzeichnet, daß jede Kulisse (12) eine rechtwinklig nach unten verlaufende Öffnung (14) aufweist.

5. Schiebedach nach Anspruch 1 bis 4, wobei jeder Führungsschiene (11) ein Schwenkhebel (19) mit zylindrischem Führungszapfen (20) zugeordnet ist, dadurch gekennzeichnet, daß die Führungszapfen (20) jeweils zwei gegenüberliegende, symmetrisch angeordnete Abflachungen (21) aufweisen, durch die jeweils ein in der Kulisse (12) der Führungsschienen (11) längsverschiebbares Gleitstück (20') gebildet ist und ferner vom Schwenkhebel (19) in seinem Winkelbereich jeweils ein achsparallel zum Führungszapfen verlaufender Stützzapfen (22) absteht, der jeweils in die Öffnung (14) der Kulisse der Führungsschiene beim Verschwenken des Deckels (6) in seine etwa horizontale Lage verschwenkt wird und beim weiteren Verschieben der Kulisse in dieser gleitet.

6. Schiebedach nach Anspruch 5, gekennzeichnet durch eine am obenliegenden Bereich des Schiebedachrahmens (3) vorgesehene, umlaufende Wasserfangrinne (4), welche ein nach oben offenes, U-förmiges Querschnittsprofil hat, wobei sich auf dem innenliegenden Schenkel (4') des rückwärtigen Abschnitts der Wasserfangrinne die beiden Schwenkhebel (19) bei in seine extreme Offenstellung (IV) geschwenktem Deckel (6) abstützen.

7. Schiebedach nach Anspruch 1, wobei die Führungen (7) jeweils an einem langgestreckten Aufnahmeelement (5) ausgebildete Führungsnuten (8) sind und sich jeweils an den gegenüberliegenden Seitenrändern des Schiebedachrahmens (3) befindet, dadurch gekennzeichnet, daß die Führungsnuten (8) jeweils aus drei stufenlos ineinanderübergehenden Längsabschnitten (8', 8", 8''') bestehen, wobei der vordere, erste Längsabschnitt (8') einen Winkel von etwa 30° und der sich an diesen anschließende zweite Längsabschnitt (8") einen Winkel von etwa 5° mit der Unterkante (7') eines Führungsteils (7) einschließt, während der dritte Längsabschnitt (8''') etwa parallel zu dieser verläuft.

8. Schiebedach nach Anspruch 3, dadurch gekennzeichnet, daß die Außenseiten der Führungsschienen (11) jeweils im Bereich eines lotrechten Schenkels (3') des Schiebedachrahmens (3) liegen und vom vorderen Ende der Führungsschienen jeweils ein Schubarm (11') nach unten absteht, in dessen freien Endbereich jeweils ein mit seinem vorderen Endabschnitt in die Führungsnut (8) des Führungsteils (7) eingreifender Gleitzapfen (33) drehfest eingesetzt ist.

9. Schiebedach nach Anspruch 1, 7 und 9, wobei der Deckel (6) über zwei Führungsschlitten (26) in den Führungsnuten (8) längsverschiebbar ist, dadurch gekennzeichnet, daß
- die beiden Führungsschlitten (26) jeweils ein U-förmiges Querschnittsprofil mit einem kurzen (26") und einem langen Schenkel (26') aufweisen, wobei der kurze Schenkel (26") längs einer in ihn eingreifenden, vom Führungsteil (7) des Aufnahmeelements (5) seitlich vorspringenden Führungsrippe (9) geführt ist und am kurzen Schenkel (26") ferner ein Antriebskabel (27) angreift, während der lange Schenkel (26') längs der lotrechten innenliegenden Wand des Führungsteils (7) verläuft.
- vom langen Schenkel (26') der beiden Führungsschlitten (26) jeweils ein Kulissenbolzen (32) und ein Gelenkbolzen (29) abstehen, welche in die Führungsnut (8) des Führungsteils (7) des Aufnahmeelements (5) eingreifen,
- am Gleitzapfen (33) eines jeden Schubarms (11') eine Gelenklasche (30) angelenkt ist, welche an ihrem gegenüberliegenden Endbereich den achsparallel zum Gleitzapfen verlaufenden Gelenkbolzen (29) trägt, der seinerseits im vorderen Bereich des langen Schenkels (26') des Führungsschlittens (26) drehbar gelagert ist,
- in Schließstellung (I) des Deckels (6) sich der Gleitzapfen (33) im Bereich der tiefsten Stelle des ersten Längsabschnitts (8') der Führungsnut (8) befindet, während dabei der Gelenkbolzen (29) und der Kulissenbolzen (32) in deren zweiten Längsabschnitt (8") eingreifen.

10. Schiebedach nach Anspruch 9, gekennzeichnet durch eine am unteren Bereich des langen Schenkels (26') eines jeden Führungsschlittens (26) vorgesehene Zahnstange (31), die mit einem am Anschraubflansch (5') des Aufnahmeelements (5) schwenkbar gelagerten Zahnsegment (35) kämmt, das seinerseits über eine Schubstange (40) mit einer ebenfalls am Anschraubflansch schwenkbar gelagerten Sicherungsgabel (39) in gelenkiger Verbindung steht, wobei bei geschlossenem Deckel (6) die Zahnstange mit dem Zahnsegment und die dabei mit ihrer Maulöffnung (39') nach hinten weisende Sicherungsgabel (39) mit einem Aufnahmezapfen (23) eines jeden Schwenkhebels (19) in Eingriff stehen, während bei der Öffnungsbewegung des Deckels die Sicherungsgabel über Schubstange zur Freigabe des Aufnahmezapfens hochgeschwenkt wird.

11. Schiebedach nach Anspruch 1 und 5, gekennzeichnet durch einen Dachhimmel (44), der an seinen vorderen Seitenbereichen über jeweils eine gelenkartig wirkende Verbindungslasch (45) am Führungsschlitten (26) befestigt ist, während an seinen hintenliegenden Seitenbereichen jeweils ein nach oben abstehender Haltewinkel (46) angebracht ist, der einen schräg nach vorne und oben verlaufenden Aufnahmeschlitz (47) aufweist, in den in Schließstellung (I) des Deckels (6) jeweils der seitlich vom Winkelbereich eines jeden Schwenkhebels (19) abstehende Aufnahmezapfen (23) eingreift.

12. Schiebedach nach Anspruch 1 und 5, gekennzeichnet durch einen in mehreren Raststellungen arretierbaren Dachhimmel (44'), der an seinen beiden seitlichen Randbereichen am Schiebedachrahmen (3) verschiebbar geführt ist und an seinen hintenliegenden Seitenbereichen jeweils einen nach oben abstehenden Haltewinkel (51) aufweist, an dem durch einen schräg nach vorne und oben verlaufenden Tragarm (52) eine nach vorne offene Aufnahmeöffnung (52') ausgebildet ist, wobei in diese in Schließstellung (I) des mindestens teilweise aus transparentem Material (6') bestehenden Deckels (6) jeweils der seitlich vom Winkelbereich eines jeden Schwenkhebels (19) abstehende Aufnahmezapfen (23) eingreift.

**Claims**

1. A sliding roof (1) for a motor vehicle, more particularly a passenger car, having the following features:
   – a frame (3) surrounding the roof opening (2) and having two opposite longitudinally-extending guides (7),
   – a cover (6) having its front side regions connected to the guides (7),
   – at least one rocking lever (19) at the rear region of the sliding frame (3) and pivoted at one end to the frame (3) and at the other end to the cover (6) via a guide pin (20), and when the cover is in the closed position (I) the bearing axis (20) of the rocking lever (19) on the cover side lies above the bearing axis (18) on the frame side (by the amount h),
   – at least one guide rail (11) extending parallel to the guides (7) is on the underside of the cover and has a longitudinal slot link (12) in which the guide pin (20) of the rocking lever (19) is mounted for rotation and longitudinal movement, and

   – when a drive means (27) engaging a longitudinally movable part (26) is actuated, the cover (6) is moved from the closed position (I) via a just-open position (II) into an extreme open position (IV), in which the rear end region of the cover extends beyond the rigid rear region (2") of the roof, characterised by the following features:
   the slot link (12) in the guide rail (11) is formed at its rear end with a circular recess (13) in which the guide pin (20) of the rocking lever (19) is rotatably mounted, and
   – the guide pin (20); which is non-rotatably inserted into the rocking lever (19), has at least one flat part (21) which, when the rocking lever is in the rear end position, is in line with a boundary of the link guide, so that the slot link (12) is movable relative to the guide pin (20).

2. A sliding roof according to claim 1, characterised in that the rocking lever (19) has a bent portion (19') on the roof side such that, when the cover (6) is in the extreme open position (IV), it and the rear roof region (2') lie approximately in or near a reference plane, and the guides (guide slots 8) extend correspondingly.

3. A sliding roof according to claim 1, the collar (6) having two guide rails (11) of rectangular cross-section along its longitudinal edges, characterised in that the facing wide sides of the guide rails (11) are each provided with the slot link (12) which is rectangular and open at the sides, and ends in the circular recess (13).

4. A sliding roof according to claim 2, characterised in that each slot link (12) has a rectangular downward opening (14).

5. A sliding roof according to claims 1 to 4, in which each guide rail (11) is associated with a rocking lever (19) and a cylindrical guide pin (20), characterised in that each guide pin (20) has two facing symmetrically-disposed flat parts (21), respectively forming a sliding member (20') for moving lengthwise in the slot link (12) of the guide rails (11), and a pivot journal (22) having its axis parallel to the guide pin projects from the bent region of each rocking lever (19) and is pivoted into an approximately horizontal position into the opening (14) of the slot guide of the guide rail when the cover (6) is pivoted, and slides in the slot link when the cover is pivoted further.

6. A sliding roof according to claim 5, characterised by a peripheral gutter (4) on the upper region of the sliding roof frame (3) and having an upwardly open U-shaped cross-section, and when the cover (6) is pivoted into the extreme open position (IV) the two rocking levers (19) rest on the inner limb (4') of the rear portion of the gutter.

7. A sliding roof according to claim 1, the guides (7) constituting respective guide slots (8) formed on an elongate receiving component (5) disposed on the respective opposite side edges of the guiding roof frame (3), characterised in that the guide slots (8) each comprise three longitudinal portions (8', 8", 8''') which steplessly merge into one another, the front first longitudinal portion (8') being at an angle of approximately 30° and the adjacent second longitudinal portion (8') being at an angle of approximately 5° to the lower edge (7') of a guide part (7), whereas the third longitudinal portion (8''') extends approximately parallel thereto.

8. A sliding roof according to claim 3, characterised in that the outer sides of the guide rails (11) each lie near a perpendicular limb (3') of the sliding roof frame (3) and a thrust arm (11') extends downwards from the front end of each guide rail and a sliding pin (33) having its front end portion engaging in the guide groove (8) of the guide part (7) is non-rotatably inserted into the free end region of the respective thrust arm.

9. A sliding roof according to claims 1, 7 and 8, the cover (6) being longitudinally movable on two guide carriages (26) in the guide slots (8), characterised in that
— the two guide carriages (26) each have a U cross-section with a short limb (26 ") and a long limb (26'), the short limb (26") being guided along a guide rib (9) engaging in it and projecting laterally from the guide part (7) of the receiving element (5) and a drive cable (27) also engages the short limb (26"), whereas the long limb (26') extends along the vertical inner wall, of the guide part (7),
— a link pin (32) and a joint pin (29) project from the long limb (26') of each of the two guide carriages and engage in the guide groove (8) of the guide part (7) of the receiving component (5),
— a joint plate (30) is pivoted to the sliding pin (33) of each thrust arm (11') and at its opposite end region carries the joint pin (29) which extends with its axis parallel to the sliding pin and is rotatably mounted in the front region of the long limb (26') of the guide carriage (26), and
— when the cover (6) is in the closed position (I), sliding pin (33) is near the lowest place on the first longitudinal portion (8') of the guide groove (8), whereas the joint pin (29) and the link pin (32) engage in the second longitudinal portion (8") thereof.

10. A sliding roof according to claim 9, characterised by a rack (31) provided on the lower region of the long limb (26') of each guide carriage (26) and meshing with a toothed segment (35) pivotably mounted on a threaded flange (5') of the receiving component (5) and pivotably connected via a thrust rod (40) to a securing fork (39) likewise pivotably mounted on the threaded flange, and when the cover (6) is closed the rack engages the toothed segment and the securing fork (39), the opening (39') of which is then pointing downwards, engages a receiving pin (23) on each locking lever (19), whereas during the opening movement of the roof the securing fork is pivoted upwards via the thrust rod, releasing the receiving pin.

11. A sliding roof according to claims 1 and 5, characterised by an inside roof lining (44), each front side region of which is secured by a respective connecting plate (45) acting as a pivot to the guide carriage (26), whereas an upwardly-projecting retaining angle member (46) is attached to each of its rear side regions and has an upward and forward sloping receiving slot (47) in which the respective receiving pin (23) projecting laterally from the bent region of each rocking lever (19) engages when the cover (6) is in the closed position (1).

12. A sliding roof according to claims 1 and 5, characterised by an inside roof lining (44') lockable in a number of stop positions and movably guided along its two lateral edge regions on the sliding roof frame (3) and having a bent retaining member (51) projecting upwards from each of its rear side regions, an upwardlyopen receiving opening (52') being formed on the angular retaining member (51) by means of an upper forwardly-sloping bearing arm (52), and when the cover (6), which is made at least partly of transparent material (6'), is in the closed position (I), the receiving pin (23) projecting laterally from the bent region of each rocking lever (19) engages in the receiving opening (52').

**Revendications**

1. Toit ouvrant pour véhicules automobiles, en particulier voitures particulières, présentant les propriétés suivantes :
— un cadre (3) entourant la découpe de toit (2), comportant deux guidages longitudinaux opposés,
— un couvercle (6) relié aux guidages (7) par ses zones latérales avant,
— au moins un levier basculant (19) se trouvant dans la zone arrière du cadre de toit ouvrant (3) et articulé d'une part à ce dernier (3) et d'autre part relié au couvercle (6) par l'intermédiaire d'un tourillon de guidage (20), l'axe de palier (20), situé côté couvercle, du levier basculant (19) étant situé au-dessus de son axe de palier (18) situé côté cadre, dans la position de fermeture (I) de ce dernier,
— au moins une glissière de guidage (11), s'étendant parallèlement aux parties de guidage (7) et comprenant une coulisse longitudinale (12) dans laquelle le tourillon de guidage (20) du levier basculant (19) est monté mobile en rotation et longitudinalement, se trouve sur la face inférieure de couvercle,
— lors de l'actionnement d'un moyen d'entraînement (27) agissant sur une parte (26) mobile longitudinalement, le couvercle (6) est déplacé en quittant sa position de fermeture (I), en passant par une position sortie (II) et en arrivant dans une position ouverte extrême (IV) dans laquelle le couvercle (6) se trouve, avec sa zone d'extrémité arrière située au-dessus de la zone de toit rigide (2') située derrière, caractérisé par les propriétés suivantes:
- la coulisse (12) prévue dans la glissière de guidage (11) présente à son extrémité arrière un évidement (13) de forme circulaire dans lequel le tourillon de guidage (20) du levier basculant (19) est monté pivotable,
— le tourillon de guidage (20) introduit fixé en rotation dans le levier basculant (19) présente au moins un aplatissement (21) aligné, en position finale arrière du levier pivotant, avec une délimitation du guidage de coulisse, de façon que la coulisse (12) soit mobile par rapport au tourillon de guidage (20).

2. Toit ouvrant selon la revendication 1, caractérisé en ce que le levier pivotant (19) présente, côté couvercle, une partie (19') pliée de façon que, le couvercle (6) se trouvant en une position ouverte extrême (IV), il se situe, avec la zone de toit arrière (2') située au-dessous, à peu près dans un plan de référence, ainsi qu'à proximité de celui-ci, les guidages (gorges de guidage 8) s'étendant en conséquence.

3. Toit ouvrant selon la revendication 1, dans lequel le couvercle (6) présente deux glissières de guidage (11) à section transversale de forme rectangulaire se trouvant sur ses bords longitudinaux, caractérisé en ce que les glissières de guidage (11) sont chacune pourvues sur leurs côtés large tournés l'un vers l'autre, de la coulisse (12) de forme rectangulaire, ouverte latéralement, à l'extrémité de laquelle se trouve l'évidement de forme circulaire (13).

4. Toit ouvrant selon la revendication 3, caractérisé en ce que chaque coulisse (12) présente une ouverture (14) s'étendant à angle droit, vers le bas.

5. Toit ouvrant selon les revendications 1 à 4, un levier pivotant (19) à tourillon de guidage cylindrique (20) étant associé à chaque glissière de guidage (11), caractérisé en ce que les tourillons de guidage (20) présentent chacun deux aplatissements (21) opposés symétriques, à l'aide desquels est constituée chaque fois une pièce de glissement (20') mobile longitudinalement dans la coulisse (12) des glissières de guidage (11), et un tourillon de soutien (22) parallèle au tourillon de guidage s'écarte en outre du levier pivotant (19), dans sa zone angulaire, et est chaque fois basculé dans l'ouverture (14) de la coulisse de la glissière de guidage, lors du basculement du couvercle (6) dans sa position à peu près verticale, et glisse dans celle-ci lors d'un déplacement supplémentaire de la coulisse.

6. Toit ouvrant selon la revendication 5, caractérisé par une gouttière (4) périphérique, prévue sur la zone supérieure du cadre de toit ouvrant (3) et présentant un profil de section transversale en forme de U et ouvert vers le haut, les deux leviers basculant (19) s'appuyant, lorsque le couvercle (6) est dans sa position ouverte extrême (IV), sur le montant intérieur (4') de la partie arrière de la gouttière.

7. Toit ouvrant selon la revendication 1, les guidages (7) étant chacun des gorges de guidage (8) réalisées sur un élément de réception allongé (5) qui se trouve chaque fois sur les bords latéraux opposés du cadre de toit ouvrant (3), caractérisé en ce que les gorges de guidage (8) se composent de trois parties longitudinales (8', 8", 8''') se transformant l'une dans l'autre sans discontinuité, la partie avant (8'), qui est la première, faisant un angle d'à peu près 30° avec le bord inférieur (7') d'une partie de guidage (7), et la deuxième partie longitudinale (8"), se raccordant à celle-ci, faisant un angle d'à peu près 5° avec (7), tandis que la troisième partie longitudinale (8''') s'étend à peu près parallèlement à (7).

8. Toit ouvrant selon la revendication 3, caractérisé en ce que les côtés extérieurs des glissières de guidage (11) sont chacun situés dans la zone d'un montant vertical (3,) du cadre de toit ouvrant (3) et qu'un bras de poussée (11') s'écarte chaque fois de l'extrémité avant des glissières de guidage vers le bas, un tourillon de glissement (33) s'engageant par sa partie d'extrémité avant dans la glissière de guidage (8) de la partie de guidage (7) étant chaque fois inséré, bloqué en rotation, dans sa zone d'extrémité libre.

9. Toit ouvrant selon les revendications 1, 7 et 8, le couvercle (6) étant mobile longitudinalement dans les glissières de guidage (8), par l'intermédiaire de deux coulisseaux de guidage (26), caractérisé en ce que :
– les deux coulisseaux de guidage (26) présentent chacun un profil de section transversale en forme de U, avec une branche courte (26") et une branche longue (26'), la branche courte (26") étant guidée le long d'une nervure de guidage (9) s'engageant sur lui, faisant saillie latéralement de la partie de guidage (7) de l'élément de réception (5), et un câble d'entraînement (27) s'engageant en outre sur la branche courte (26"), tandis que la branche longue (26') s'étend le long d'une paroi intérieure verticale de la partie de guidage (7),
– un boulon de coulisse (32) et un boulon d'articulation (29) s'engageant dans la gorge de guidage (8) de la partie de guidage (7) de l'élément de réception (5) s'écartent chaque fois de l'aile courte (26') des deux coulisseaux de guidage (26),
– une attache d'articulation (30) est articulée sur le tourillon de glissement de chaque bras de poussée (11'), attache (30) portant à sa zone d'extrémité opposée le boulon d'articulation (29) d'axe parallèle au tourillon de glissement qui est monté de son côté dans la zone avant de la branche longue (26') du coulisseau de guidage (26),
– en position de fermeture (1) du couvercle (6), le tourillon de glissement (33) se trouve dans la zone de position la plus basse de la première partie longitudinale (8') de la gorge de guidage (8), tandis qu'alors le boulon d'articulation (29) et le boulon de coulisse (32) s'engagent dans sa deuxième partie longitudinale (8").

10. Toit ouvrant selon la revendication 9, caractérisé par une crémaillère (31) prévue à la zone inférieure de la branche longue (26') de chaque coulisseau de guidage (26) et engrenant sur un segment denté (35) monté pivotant sur le rebord de vissage (5') de l'élément de réception (5), segment (35) placé de son côté en relation articulée sur une fourchette de sécurité (39) montée pivotante également sur le rebord de vissage, la crémaillère avec le segment denté et la fourchette de sécurité (39) présentant alors son ouverture (39') tournée vers l'arrière et étant alors en prise sur un tourillon de réception (23) de chaque levier basculant (19), dans la position fermée du couvercle, tandis que, dans la position ouverte du couvercle, la fourchette de sécurité est relevée au-dessus de la tige de poussée, en vue de libérer le tourillon de réception.

11. Toit ouvrant selon les revendications 1 à 5, caractérisé par un habillage de plafond de toit (44), qui est chaque fois fixé, dans ses zones latérales avant, sur le coulisseau de guidage (26), par l'intermédiaire d'une attache de liaison (45) agissant comme une articulation, tandis qu'une cornière de maintien (46), s'écartant chaque fois vers le haut et présentant une fente de réception (47) s'étendant en biais vers l'avant et vers le haut, est montée à ses zones latérales arrière, le tourillon de réception (23) s'écartant latéralement de la zone angulaire de chaque levier basculant (19) s'engageant chaque fois dans la fente (47) lorsque le couvercle (6) est en position de fermeture (I).

12. Toit ouvrant selon les revendications 1 et 5, caractérisé par un habillage de plafond de toit (44') susceptible d'être bloqué dans plusieurs positions de crans et guidé mobile sur le cadre (3) de toit coulissant, sur ses zones de bordure latérales, et présentant chaque fois à ses zones latérales arrière une cornière de maintien (51) s'écartant vers le haut, sur laquelle une ouverture de réception (52') ouverte vers l'avant est réalisée, dans un bras support (52) s'étendant en biais vers l'avant et vers le haut, ouverture dans laquelle le tourillon de réception (23) s'écartant latéralement de la zone angulaire de chaque levier basculant (19) s'engage chaque fois, lorsque le couvercle (6), se composant au moins partiellement d'une matière transparente (6'), est en position de fermeture (I).

**Fig. 1**

Fig. 2a

Fig. 2

Fig. 3

Fig. 4a

Fig. 4

Fig. 5

EP 0 221 241 B1

Fig. 6a

Fig. 6

Fig. 7

Fig. 8

Fig. 9a

Fig. 9

Fig. 10

Fig. 11a

Fig. 11

Fig. 12

Fig. 13a

Fig. 13

Fig. 14

EP 0 221 241 B1

*Fig. 13 b*

*Fig. 15*